# EUROPEAN PATENT APPLICATION

(11) **EP 0 557 537 A1**
(43) Date of publication of application: **01.09.1993**
(21) Application number: 91311008.6
(22) Date of filing: 28.11.1991
(51) Int. Cl.: B29C 65/10, B29C 65/20, B29C 65/02

(54) **Plastics welding**

(71) Applicant: GENERAL TRADING & CO., Edinburgh, EH2 4DD (GB)
(72) Inventor: Bonfiglio, Guido, San Vittore, Grigioni (CH)
(74) Representative: Cookson, Barbara Elizabeth

(57) **Abstract**

A method of plastics welding particularly suited to thermoplastics such as polypropylene comprises the application of direct heat to the surfaces to be welded while pressing the surfaces together under a pressure of between 1 and 10N, relieving the pressure to remove the heating device (10) and reapplying the pressure to weld the surfaces (6, 8) to be joined. The surfaces may be heated to the softening point by direct contact with a pre-heated plate (10) or by the use of a hot air or gas blower.

## Description

The present invention relates to plastics welding and, more specifically, to autogenous welding in which no flux, adhesive or solder is used.

Polypropylene and other thermoplastics materials may be autogenously welded by various methods. However, the existing methods present various technical problems. In particular, the appearance of the external surface of the plastics components may be deformed or defaced during the welding process. This problem is particularly apparent where the weld is produced by the external application of heat to the outer surfaces of the components to be joined.

Other welding methods, such as the use of ultrasound, require expensive apparatus.

The method of autogenously welding the surfaces of two plastics components in accordance with the invention is characterised in that said surfaces are directly heated and the softened surfaces are subsequently pressed together.

Direct heat is used in the method instead of heating the surfaces to be welded by conducting the energy through the body of the component. This method is advantageous in that the components are not distorted and the components retain their original aesthetic appearance.

The direct application of heat may be carried out either by the interposition between the two surfaces of a heated plate, or of a blower which applies hot air or gas to the surfaces. Other heating devices could also be employed.

Preferably, the pressure applied to the components during the pressing stage is in the range 100-1000g force (approximately 1-10N). A similar pressure may also be applied during the heating stage.

Preferably the heating plate and support surfaces on the blower are coated with non-adhesive material, such as polytetrafluoroethylene (PTFE).

The invention also includes apparatus for carrying out the method as defined in the claims.

Other advantageous features of the invention are defined in the claims.

Two embodiments of the invention will now be described, by way of example only, with reference to the accompanying diagrammatic drawings, in which:-
Figures 1A-1C illustrate diagrammatically the three stages of a first embodiment of the method;
Figure 2 shows a cross-sectional view through a blower interposed between two components to be welded in accordance with a second embodiment of the method;
Figure 3 shows an external plan view of the blower shown in Figure 2; and
Figure 4 is a section on the line A-A in Figure 3.

Reference numerals 2 and 4 indicate two plastics components having surfaces 6 and 8 which are to be welded together. Although the components 2, 4 are shown as being plates, it will be appreciated that the components may have any configuration according to their intended use. For the purposes of this specific description the components 2, 4 are presumed to be made of polypropylene which may be standard density (902-906 kg m⁻³) or expanded or foamed to a density of 165 kg m⁻³ so that a 2mm thick plate would weigh 330gm m⁻². The method to be described, is, however also applicable to other thermoplastics materials. The reader will appreciate that the method may also be used with any softenable plastics material such as polystyrene, ABS, PVC, polycarbonate, metacrylic, PET, OPS KOBLEND and polyethylene. OPS and KOBLEND are trade marks of ICI. These plastics materials may be used in their normal or foamed or expanded states.

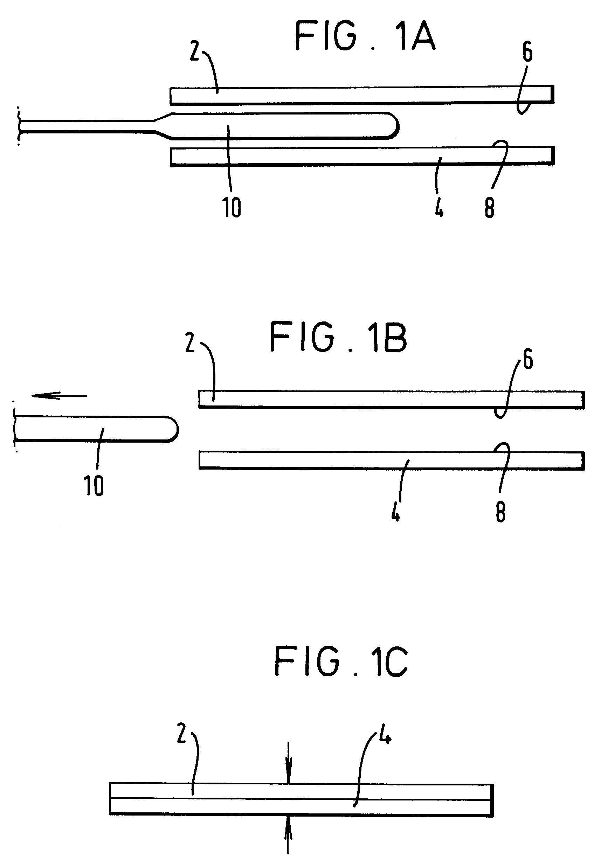

In the first stage of the method as illustrated in Figure 1, a plate 10 which is elongated in the direction of the surfaces 6, 8 to be joined is interposed between the two surfaces. The plate is pre-heated to a temperature in the range of 160°C to 300°C. A pressure of between 1-10N is applied to the assembly as shown in Figure 1A so that the surfaces to be welded are heated directly by the surfaces of the plate 10 to their softening point which is approximately 160°C in the case of polypropylene.

The surface of the plate 10 is made of or coated with a layer of non-adhesive material such as PTFE or glass in order to prevent the softened surfaces 6, 8 adhering to the plate 10 during the heating stage.

During the next stage of the method as illustrated in Figure 1B, the pressure on the components is relieved to allow the plate 10 to be withdrawn. In the final stage as illustrated in Figure 1C, the pressure is immediately re-applied and welding of the softened surfaces 6, 8 is accomplished.

The duration of each of the first and final stages may be 0.2 to 5 seconds.

In the second embodiment of the method of the invention, the surfaces 6, 8 of the components to be welded are directly heated by means of the application of hot gas or air which is applied to them by means of a blower 12.

The blower 12 comprises a relatively large diameter inlet pipe 14 which feeds a laminar distribution head or nozzle 16 which has an array of exit holes 18 on each surface. At either side of the array of holes, raised support surfaces 20 are provided. These support surfaces project beyond the plane of the exit holes 18 so that the surfaces 6, 8 to be welded do not come into direct contact with and therefore close the array of exit holes 18. The support surfaces 20 are preferably coated with PTFE or other non-adhesive coating to prevent the nozzle 16 sticking to the surfaces to be welded.

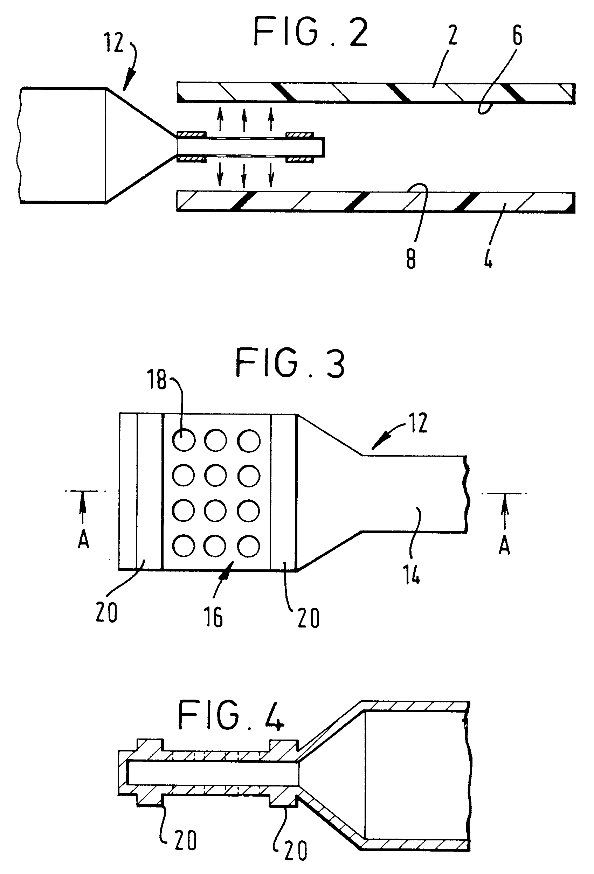

In the method of the second embodiment, the nozzle 16 is positioned as shown in Figure 2 between the surfaces of the two plastics components 2, 4 to be welded. The hot air or gas is driven out through the exit holes for a sufficient time in order for the surfaces 6, 8 to be welded to become superficially softened. Depending on the temperature of the air and the softening temperature of the plastics material of which the components are formed, a typical time for the blower to remain in position would be between approximately 0.2 to 5 seconds. Optionally the assembly shown in Figure 2 may be subjected to external pressure during the heating stage to increase the heating efficiency. This pressure would then be relieved and reapplied as in the first method described to allow the nozzle to be removed.

Once the surfaces 6, 8 have been softened, the blower is removed and the surfaces to be welded pressed together with a pressure of 1-10N as in the previous method. The application of pressure is maintained for a time period of approximately 0.2-5 seconds in order to ensure that the weld is completed satisfactorily.

It will be appreciated that, using either method, an efficient weld can be produced rapidly and with minimum damage to the remaining surfaces of the components since the pressure applied to the components is relatively low and the heating is direct.

## Claims

1. A method of autogenously welding the surfaces of two plastics components (2, 4) characterised in that said surfaces are directly heated and the softened surfaces are subsequently pressed together.

2. A method of welding the surfaces of two softenable plastics components (2, 4) comprising interposing a heating device (10, 12) between the surfaces (6, 8) and heating the surfaces (6, 8) to their softening temperature, withdrawing the heating device (10, 12) and pressing the softened surfaces (6, 8) together.

3. A method is claimed in claim 2, wherein the heating device comprises a pre-heated plate (10).

4. A method is claimed in claim 2, wherein the heating device comprises a blower (12) for directing hot air or gas at the surfaces to be welded.

5. A method is claimed in any one of the preceding claims, wherein the pressure applied is between 1 and 10N.

6. A method as claimed in any one of the preceding claims, wherein the components are pressed together during the heating stage.

7. A blower (12), for use in welding plastics components, comprising an inlet pipe (14) for hot air or gas and a laminar nozzle (16) having exit holes (18) for the hot air on opposing surfaces.

8. A blower is claimed in claim 7, wherein support surfaces (20) project from the opposing surfaces of the laminar nozzle in order to prevent the exit holes (18) coming into direct contact with surfaces (6, 8) to be heated by the blower.

9. A blower as claimed in claim 8, wherein the support surfaces (20) are non-adhesive.

10. A blower is claimed in claim 8 or 9, wherein the support surfaces are coated with PTFE or other low friction material.
